# EUROPEAN PATENT APPLICATION

(11) **EP 4 645 404 A1**
(43) Date of publication of application: **05.11.2025**
(21) Application number: 24913265.5
(22) Date of filing: 20.08.2024
(51) Int. Cl.: H01M 4/04, B23K 26/38, B23K 37/04, B23K 26/362, B23K 101/36

(54) **ELECTRODE PRODUCTION APPARATUS AND BATTERY CELLS COMPRISING ELECTRODES PRODUCED THEREBY, AND BATTERY PACK AND VEHICLE COMPRISING BATTERY CELLS**

(30) Priority: 26.12.2023 KR 20230191780; 08.03.2024 KR 20240033438
(71) Applicant: LG Energy Solution, Ltd., Seoul 07335 (KR)
(72) Inventor: KIM, Sang-Yeol, Daejeon 34122 (KR); PARK, Sang-Rin, Daejeon 34122 (KR); KIM, Min-Gyu, Daejeon 34122 (KR); PARK, Jong-Sik, Daejeon 34122 (KR); LEE, Je-Jun, Daejeon 34122 (KR)
(74) Representative: Goddar, Heinz J.
(86) International application number: PCT/KR2024/012361
(87) International publication number: WO 2025/143424

(57) **Abstract**

Disclosed are an electrode production device, a battery cell including an electrode produced using the same, and a battery pack and a vehicle including the battery cell. An electrode production device according to an embodiment of the present disclosure includes: a transport member configured to transport an electrode foil coated with an electrode active material; a laser member configured to irradiate the electrode foil with a laser; and a jig member disposed in contact with the electrode foil and configured to support the electrode foil, and a foreign-matter adhesion prevention portion is formed on the jig member.

## Description

### TECHNICAL FIELD

This application is based on and claims priority from Korean Patent Application No. 10-2023-0191780, filed on December 26, 2023, and Korean Patent Application No. 10-2024-0033438, filed on March 08, 2024, with the Korean Intellectual Property Office, the disclosure of which is incorporated herein in its entirety by reference.

The present disclosure relates to an electrode production device, a battery cell including an electrode produced using the same, and a battery pack and a vehicle including the battery cell, and more specifically, it relates to an electrode production device capable of improving the electrode quality, a battery cell including an electrode produced using the same, and a battery pack and a vehicle including the battery cell.

### BACKGROUND ART

In general, secondary batteries refer to batteries capable of being repeatedly charged and discharged, such as lithium-ion batteries, lithium-polymer batteries, nickelcadmium batteries, nickel-hydrogen batteries, nickel-zinc batteries, and the like.

Secondary batteries may be classified, depending on the shape of a battery case, into cylindrical or prismatic batteries in which the electrode assembly is accommodated in a cylindrical or prismatic metal can and pouch-type secondary batteries in which the electrode assembly is accommodated in a pouch-type case of an aluminum laminate sheet.

These secondary batteries may be manufactured by storing an electrode assembly including a positive electrode and a negative electrode that are laminated with a separator therebetween and an electrolyte in cases of various shapes, and sealing the case.

The electrode (positive electrode or negative electrode) of the secondary battery may include a coated portion in which a coating layer of an electrode active material is formed by pressing an electrode mixture onto the surface of an electrode foil, and an uncoated portion in which the coating layer is not formed.

Meanwhile, the electrode of the secondary battery may be produced through a roll-to-roll process in which an electrode foil, having a coating layer of electrode active material formed on the surface, is wound around a roll and moved. In addition, in order to manufacture the electrode assembly, the electrode may be partially cut by, for example, a laser.

Here, when cutting the electrode using a laser, a jig may be used to prevent vibrating or shaking of the electrode, and conventional jigs have a problem in which foreign substances such as fumes generated by laser cutting adhere thereto, which causes defects in the electrode.

### DISCLOSURE

### Technical Problem

The present disclosure is designed to solve the problems of the related art, and therefore the present disclosure is directed to providing an electrode production device capable of preventing foreign substances from adhering to a jig member used in the process of cutting an electrode during an electrode production process, a battery cell including an electrode produced using the same, and a battery pack and a vehicle including the battery cell.

In addition, the present disclosure is also to provide an electrode production device capable of preventing foreign substances from adhering to a jig member, thereby avoiding electrode defects and ultimately improving electrode quality, and a battery cell including an electrode produced using the same, and a battery pack and a vehicle including the battery cell.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided an electrode production device including: a transport member configured to transport an electrode foil coated with an electrode active material; a laser member configured to irradiate the electrode foil with a laser; and a jig member disposed in contact with the electrode foil and configured to support the electrode foil, wherein a foreign-matter adhesion prevention portion is formed on the jig member.

In an embodiment, the jig member may include: a first part disposed in a vertical direction and having an inner groove formed thereon; a second part coupled to the first part on the upper side; and a third part coupled to the first part on the lower side.

In an embodiment, the second part may include: a second part-main portion coupled to the first part; and a second part protrusion protruding downward from the second part-main portion.

In an embodiment, the third part may include: a third part-main portion coupled to the first part; and a third part protrusion protruding upward from the third part-main portion.

In am embodiment, a gap may be formed between the second part protrusion and the third part protrusion.

In an embodiment, the foreign-matter adhesion prevention portion may be configured as a first inclination portion formed at an end of the second part protrusion.

In an embodiment, the foreign-matter adhesion prevention portion may be configured as a second inclination portion formed at an end of the third part protrusion.

In an embodiment, the foreign-matter adhesion prevention portion may be configured as a third inclination portion formed in the inner groove so that foreign matter slides downward.

In an embodiment, the third inclination portion may be formed to be inclined downward from the first part toward the third part.

In an embodiment, a foreign-matter accumulation portion where the foreign matter gathers may be formed at an end of the third inclination portion.

In an embodiment, a suction member for sucking the foreign matter may be provided, and the suction member may be disposed close to the foreign-matter accumulation portion.

In an embodiment, the transport member may include: a first transfer roll disposed on the upper side; and a second transfer roll disposed on the lower side, and the electrode foil may move from the upper side to the lower side by the first transfer roll and the second transfer roll.

In an embodiment, the laser member may be configured to irradiate the electrode foil with a laser in a horizontal direction.

According to another aspect of the present disclosure, there may be provided a battery cell including an electrode produced using the electrode production device described above, a battery pack including at least one battery cell described above, and a vehicle including at least one battery cell described above.

### Advantageous Effects

The embodiments of the present disclosure have the effect of preventing foreign substances from adhering to the jig member used in the process of cutting an electrode during the electrode production process.

In addition, it is possible to prevent foreign substances from adhering to the jig member, thereby avoiding electrode defects and ultimately improving electrode quality.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a schematic front view of an electrode production device according to an embodiment of the present disclosure, from which a suction member is omitted.
FIG. 2 is a drawing illustrating a jig member in an electrode production device according to an embodiment of the present disclosure, in which foreign matter is sliding along a third inclination portion.
FIG. 3 is a drawing illustrating a state in which foreign matter moves along the third inclination portion in FIG. 2 and then gathers in a foreign-matter accumulation portion.
FIG. 4 is an enlarged view of part B in FIG. 3.
FIG. 5 is a drawing illustrating a suction member when viewed in the direction of arrow A in FIG. 2.
FIG. 6 is a drawing schematically illustrating the configuration of a battery pack including a battery cell having an electrode produced using an electrode production device according to an embodiment of the present disclosure.
FIG. 7 is a drawing illustrating a vehicle including the battery pack in FIG. 6.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

The expression "an element is 'coupled' or 'connected' to another element" should be understood that the elements may be directly coupled or connected to each other, and that the elements may be indirectly coupled or connected through a connection member.

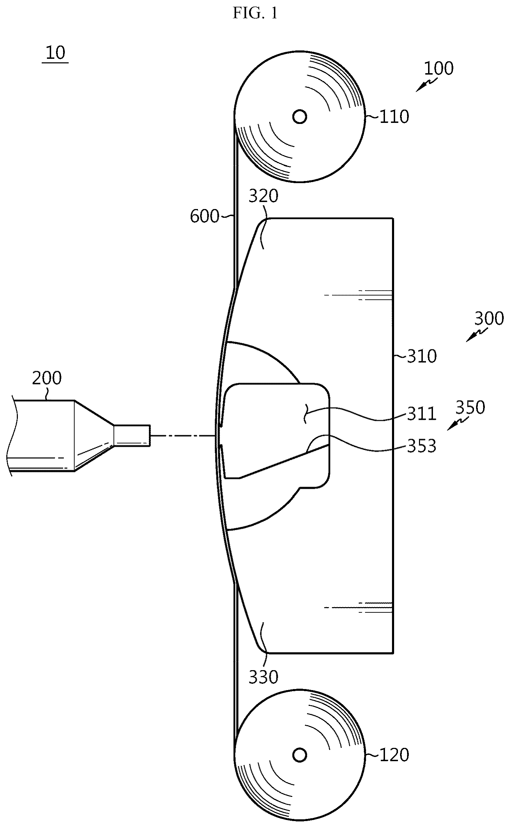

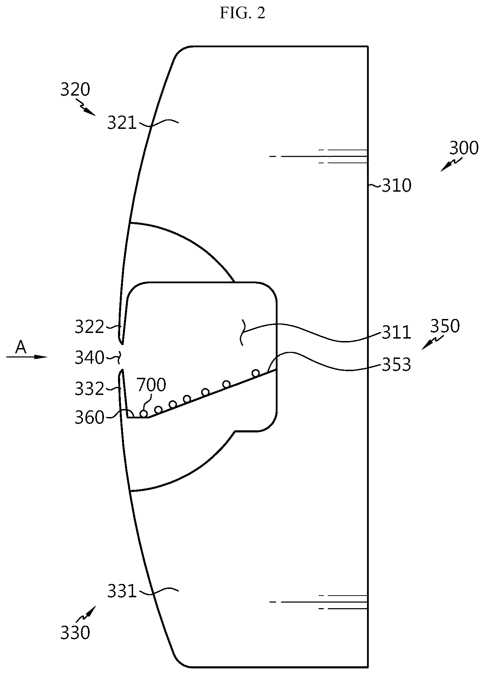

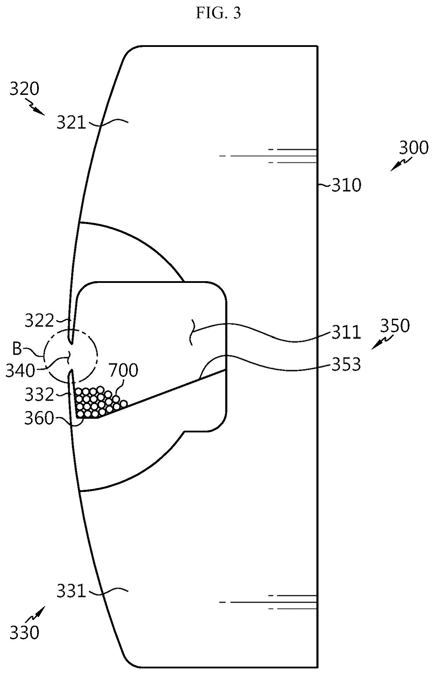

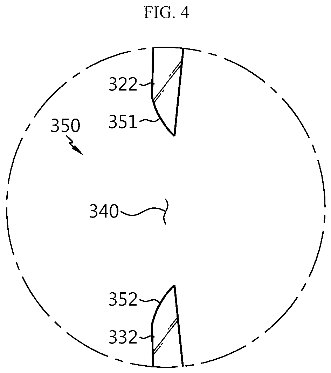

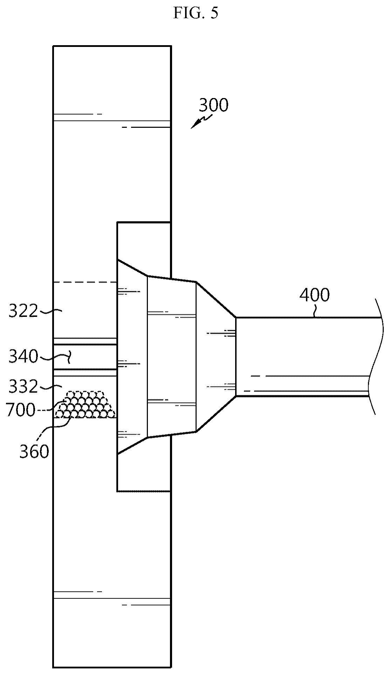

FIG. 1 is a schematic front view of an electrode production device according to an embodiment of the present disclosure, from which a suction member is omitted, FIG. 2 is a drawing illustrating a jig member in an electrode production device according to an embodiment of the present disclosure, in which foreign matter is sliding along a third inclination portion, FIG. 3 is a drawing illustrating a state in which foreign matter moves along the third inclination portion in FIG. 2 and then gathers in a foreign-matter accumulation portion, FIG. 4 is an enlarged view of part B in FIG. 3, and FIG. 5 is a drawing illustrating a suction member when viewed in the direction of arrow A in FIG. 2.

Referring to FIG. 1, an electrode production device 10 according to an embodiment of the present disclosure relates to a device for producing an electrode (positive electrode or negative electrode) by transporting an electrode foil 600 on which a coating layer is formed with an electrode active material. The electrode may encompass both a wet electrode and a dry electrode.

For example, the wet electrode is manufactured through a process of applying a slurry-state electrode mixture including a solvent onto the surface of an electrode substrate such as an electrode foil 600 to form a coating layer and then drying the coating layer.

In addition, the dry electrode is manufactured through a process of forming a coating layer by pressing an electrode mixture in a powder state (powder mixture), which does not contain a solvent, onto the surface of an electrode foil 600. That is, the electrode mixture is mixed without a liquid medium such as a solvent or dispersion medium, and then the electrode mixture in a powder state is pressed while passing through a rolling roll, thereby manufacturing the electrode.

Here, the electrode foil 600 may include a coated portion having a coating layer of electrode active material formed on the surface, and an uncoated portion (e.g., both ends of the electrode foil 600) having no coating layer of electrode active material.

The electrode production device 10 according to an embodiment of the present disclosure relates to a device capable of preventing foreign matter 700 from adhering to a jig member 300 supporting the electrode foil 600 when the electrode foil 600 is cut by a laser while being transported. Hereinafter, the device will be described in detail.

Referring to FIG. 1, the electrode production device 10 according to an embodiment of the present disclosure may be configured to include a transport member 100, a laser member 200, and a jig member 300.

The transport member 100 transports an electrode foil 600 coated with an electrode active material. The transport member 100 may be configured in various forms, and may include, for example, a plurality of rollers to transport the electrode foil 600 in a roll-to-roll manner. Although the transport member 100 is not limited thereto, an embodiment in which the transport member 100 includes a plurality of rollers will be described below for convenience of explanation.

Referring to FIG. 1, the transport member 100 may include a first transfer roll 110 and a second transfer roll 120. Here, the first transfer roll 110 and the second transfer roll 120 may be disposed at various positions, and for example, as shown in FIG. 1, the first transfer roll 110 may be disposed on the upper side, and the second transfer roll 120 may be disposed on the lower side.

In this embodiment, the electrode foil 600 is transported from the first transfer roll 110 on the upper side to the second transfer roll 120 on the lower side. That is, the electrode foil 600 moves from the upper side to the lower side by the first transfer roll 110 and the second transfer roll 120.

Referring to FIG. 1, the laser member 200 is configured to irradiate the electrode foil 600 with a laser. The laser member 200 may include various types of laser equipment. Referring to FIG. 1, when the electrode foil 600 moves from the upper side to the lower side by the first transfer roll 110 and the second transfer roll 120, the laser member 200 may be configured to irradiate the electrode foil 600 with a laser in a horizontal direction in FIG. 1.

Referring to FIG. 1, the jig member 300 comes into contact with the electrode foil 600 and supports the electrode foil 600. The jig member 300 may prevent the occurrence of vibration or shaking of the electrode foil 600 when the electrode foil 600 is cut by the laser member 200, thereby preventing cutting defects such as uneven cutting or cutting of a wrong part rather than a predetermined part when cutting the electrode foil 600 by the laser member 200.

In addition, a foreign-matter adhesion prevention portion 350 is formed on the jig member 300. The foreign-matter adhesion prevention portion 350 will be described later.

The jig member 300 may be configured in various ways, and may include, for example, a first part 310, a second part 320, and a third part 330. Here, the first part 310, the second part 320, and the third part 330 are temporarily divided in the jig member 300 only for the convenience of explanation, and the division of the first part 310, the second part 320, and the third part 330 are not absolute. For example, the first part 310, the second part 320, and the third part 330 may be manufactured separately from each other and then combined to form the jig member 300, or the first part 310, the second part 320, and the third part 330 may be integrally formed in the manufacturing stage.

Referring to FIG. 1 and FIG. 2, the first part 310 is disposed in the vertical direction. In addition, an inner groove 311 is formed in the first part 310. Here, the inner groove 311 may be formed over the entire first part 310, second part 320, and third part 330, may be formed over any one of the first part 310, the second part 320, and the third part 330, or may be formed over two of the first part 310, the second part 320, and the third part 330. That is, the inner groove 311 may be formed over one or more of the first part 310, the second part 320, and the third part 330.

The second part 320 is coupled to the first part 310 on the upper side of the third part 330 in FIG. 2. In addition, the third part 330 is coupled to the first part 310 on the lower side of the second part 320 in FIG. 2.

That is, in FIG. 2, the second part 320 is disposed on the upper side, and the third part 330 is disposed on the lower side, and they are coupled to the first part 310 respectively.

Referring to FIG. 2, the second part 320 may include a second part-main portion 321 and a second part protrusion 322. The second part-main portion 321 is coupled to the first part 310. That is, the second part-main portion 321 is coupled to the first part 310 on the upper side of a third part-main portion 331. In addition, the second part protrusion 322 protrudes downward from the second part-main portion 321.

Referring back to FIG. 2, the third part 330 may include a third part-main portion 331 and a third part protrusion 332. The third part-main portion 331 is coupled to the first part 310. That is, the third part-main portion 331 is coupled to the first part 310 on the lower side of the second part-main portion 321. In addition, the third part protrusion 332 protrudes upward from the third part-main portion 331.

Here, a gap 340 may be formed between the second part protrusion 322 and the third part protrusion 332, and the laser member 200 may radiate the laser to the gap 340 between the second part protrusion 322 and the third part protrusion 332.

In addition, referring to FIG. 4, the foreign-matter adhesion prevention portion 350 may be configured as a first inclination portion 351 formed at the end of the second part protrusion 322. Alternatively, the foreign-matter adhesion prevention portion 350 may be configured as a second inclination portion 352 formed at the end of the third part protrusion 332.

That is, foreign matter 700 generated when the electrode foil 600 is cut by a laser may adhere to the jig member 300. In particular, since the second part protrusion 322 or the third part protrusion 332, which protrudes from the jig member 300, is in direct contact with the electrode foil 600, if foreign matter 700 adheres to the second part protrusion 322 or the third part protrusion 332, defects may be caused in the electrode foil 600.

The electrode production device 10 according to an embodiment of the present disclosure has a first inclination portion 351 (foreign-matter adhesion prevention portion 350) formed at the end of the second part protrusion 322 or a second inclination portion 352 (foreign-matter adhesion prevention portion 350) formed at the end of the third part protrusion 332, thereby preventing the adherence of foreign matter 700.

That is, in the case where the first inclination portion 351 is formed in the second part protrusion 322 or the second inclination portion 352 is formed in the third part protrusion 332, the area of the second part protrusion 322 is reduced compared to the case where the first inclination portion 351 is not formed, and the area of the third part protrusion 332 is also reduced compared to the case where the second inclination portion 352 is not formed, making it difficult for the foreign matter 700 to adhere.

That is, if the first inclination portion 351 or the second inclination portion 352 is formed very sharply, it is difficult for the foreign matter 700 to adhere to the first inclination portion 351 or the second inclination portion 352, so that adherence of the foreign matter 700 is difficult. However, the sharpness of the first inclination portion 351 or the second inclination portion 352 may be determined in consideration of the degree to which the electrode foil 600 is not damaged.

In addition, there is an effect of preventing the foreign matter 700 from adhering to the jig member 300, thereby preventing electrode defects and ultimately improving electrode quality.

Meanwhile, the first inclination portion 351 may be formed in various ways. For example, the first inclination portion 351 may be formed to face the outside of the second part protrusion 322, may be formed to face the inside of the second part protrusion 322, or may be formed entirely along the perimeter of the second part protrusion 322.

In addition, similar to the first inclination portion 351, the second inclination portion 352 may also be formed in various ways. For example, the second inclination portion 352 may be formed to face the outside of the third part protrusion 332, may be formed to face the inside of the third part protrusion 332, or may be formed entirely in the perimeter of the third part protrusion 332.

That is, the inclination of the first inclination portion 351 and second inclination portion 352 may be formed in any direction.

Referring to FIG. 2, in another embodiment, the foreign-matter adhesion prevention portion 350 may be configured as a third inclination portion 353 formed in the inner groove 311 so that the foreign matter slides downward.

For example, the third inclination portion 353 may be formed in the inner groove 311 of the jig member 300 so that the foreign matter 700 slides downward. Here, the third inclination portion 353 may be formed to be inclined downward from the first part 310 toward the third part 330.

Referring to both FIG. 2 and FIG. 3, the third inclination portion 353 formed in the inner groove 311 of the jig member 300 causes the foreign matter 700 introduced into the inner groove 311 to slide downward, so that the foreign matter 700 may gather at a predetermined position.

That is, the third inclination portion 353 may prevent the foreign matter 700 from adhering to the inner groove 311 of the jig member 300.

In addition, for example, a foreign-matter accumulation portion 360 may be formed at the end of the third inclination portion 353, so that foreign matter 700 sliding along the third inclination portion 353 is collected in the foreign-matter accumulation portion 360 (see FIG. 3). As described above, when the foreign matter 700 is collected in the foreign-matter accumulation portion 360, it is easy to discard the foreign matter 700.

Referring to FIG. 5, a suction member 400 is provided to suck in the foreign matter 700, and may be disposed, for example, close to the foreign-matter accumulation portion 360. The suction member 400 may be configured in various ways, and may include, for example, various suction devices (e.g., a vacuum suction device).

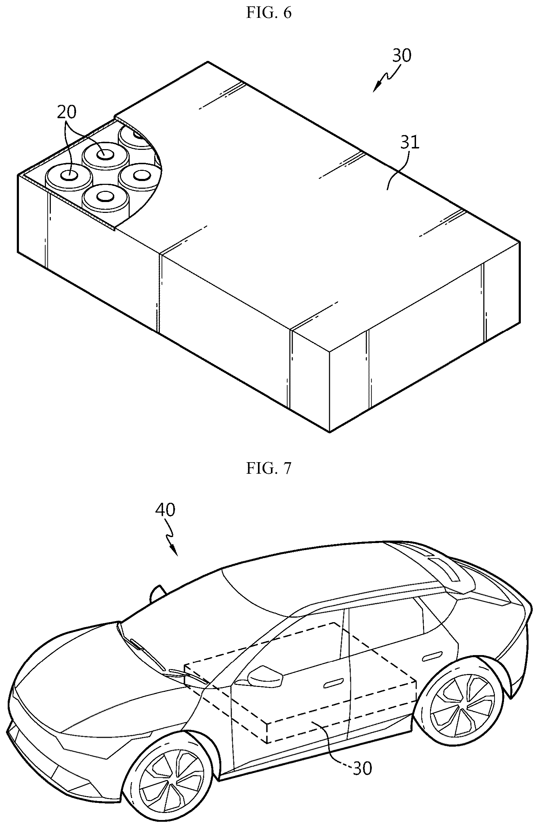

FIG. 6 is a drawing schematically illustrating the configuration of a battery pack including a battery cell having an electrode produced using an electrode production device according to an embodiment of the present disclosure.

Referring to FIG. 6, a battery pack 30 according to an embodiment of the present disclosure may include one or more battery cells 20. Here, the battery cell 20 includes an electrode produced using electrode production devices 10 according to the respective embodiments of the present disclosure described above.

In addition, the battery pack 30 may further include a pack housing 31 for storing the battery cell 20 and various devices for controlling charging and discharging of the battery cell 20, such as a BMS, a current sensor, a fuse, or the like.

Meanwhile, although the cylindrical battery cell is provided inside the pack housing 31 in FIG. 6, the present disclosure is not limited thereto, and the battery cell 20 may include a pouch-type battery cell or a prismatic battery cell.

FIG. 7 is a drawing illustrating a vehicle including the battery pack in FIG. 6.

Referring to FIG. 7, a vehicle 40 according to an embodiment of the present disclosure may include one or more battery cells 20 or battery packs 30 including electrodes produced using electrode production devices 10 according to the respective embodiments of the present disclosure. Here, the vehicle 40 includes various vehicles designed to use electricity, such as electric vehicles or hybrid vehicles.

Meanwhile, although terms indicating directions such as upward, downward, left, and right are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

### INDUSTRIAL APPLICABILITY

The present disclosure relates to an electrode production device, a battery cell including an electrode produced using the same, and a battery pack and a vehicle including the battery cell, and is particularly applicable to industries related to secondary batteries.

## Claims

1. An electrode production device comprising:
a transport member configured to transport an electrode foil coated with an electrode active material;
a laser member configured to irradiate the electrode foil with a laser; and
a jig member disposed in contact with the electrode foil and configured to support the electrode foil,
wherein a foreign-matter adhesion prevention portion is formed on the jig member.

2. The electrode production device according to claim 1,
wherein the jig member comprises:
a first part disposed in a vertical direction and having an inner groove formed thereon;
a second part coupled to the first part on the upper side; and
a third part coupled to the first part on the lower side.

3. The electrode production device according to claim 2,
wherein the second part comprises:
a second part-main portion coupled to the first part; and
a second part protrusion protruding downward from the second part-main portion.

4. The electrode production device according to claim 3,
wherein the third part comprises:
a third part-main portion coupled to the first part; and
a third part protrusion protruding upward from the third part-main portion.

5. The electrode production device according to claim 4,
wherein a gap is formed between the second part protrusion and the third part protrusion.

6. The electrode production device according to claim 3,
wherein the foreign-matter adhesion prevention portion is configured as a first inclination portion formed at an end of the second part protrusion.

7. The electrode production device according to claim 4,
wherein the foreign-matter adhesion prevention portion is configured as a second inclination portion formed at an end of the third part protrusion.

8. The electrode production device according to claim 2,
wherein the foreign-matter adhesion prevention portion is configured as a third inclination portion formed in the inner groove so that foreign matter slides downward.

9. The electrode production device according to claim 8,
wherein the third inclination portion is formed to be inclined downward from the first part toward the third part.

10. The electrode production device according to claim 9,
wherein a foreign-matter accumulation portion where the foreign matter gathers is formed at an end of the third inclination portion.

11. The electrode production device according to claim 10,
wherein a suction member for sucking the foreign matter is provided, and
wherein the suction member is disposed close to the foreign-matter accumulation portion.

12. The electrode production device according to claim 1,
wherein the transport member comprises:
a first transfer roll disposed on the upper side; and
a second transfer roll disposed on the lower side, and
wherein the electrode foil moves from the upper side to the lower side by the first transfer roll and the second transfer roll.

13. The electrode production device according to claim 12,
wherein the laser member is configured to irradiate the electrode foil with a laser in a horizontal direction.

14. A battery cell comprising an electrode produced using an electrode production device according to any one of claims 1 to 13.

15. A battery pack comprising at least one battery cell according to claim 14.

16. A vehicle comprising at least one battery cell according to claim 14.
